# EUROPEAN PATENT SPECIFICATION

(11) **EP 0 508 984 B1**
(45) Date of publication and mention of the grant of the patent: **04.09.1996**
(21) Application number: 90909574.7
(22) Date of filing: 25.06.1990
(51) Int. Cl.: A23B 9/18, A23B 9/22

(54) **PHOSPHINE FUMIGATION METHOD**
VERFAHREN ZUR PHOSPHIN-BEGASUNG
PROCEDE DE FUMAISON A LA PHOSPHINE

(30) Priority: 27.06.1989 AU 4936/89
(43) Date of publication of application: 21.10.1992
(60) Divisional application: 96101969.2
(73) Proprietor: COMMONWEALTH SCIENTIFIC AND INDUSTRIAL RESEARCH ORGANISATION, Campbell, Australian Capital Territory 2601 (AU)
(72) Inventor: WINKS, Robert, Gordon, Isaacs, ACT 2607 (AU)
(74) Representative: Marshall, Monica Anne
(86) International application number: AU9000268
(87) International publication number: WO9100017

(56) References cited:
- EP-A- 0 318 040
- DE-A- 3 444 942
- DE-A- 3 800 697
- FR-A- 2 531 840
- GB-A- 2 065 445
- GB-A- 2 177 004
- US-A- 3 802 333
- US-A- 4 200 657
- US-A- 4 756 117
- US-A- 4 814 154
- Stored Grain Protection Conference, 1983, Section 5.1, R.G. Winks: "Flow-through phosphine fumigation - a new technique"

## Description

### Technical Field

This invention concerns the fumigation of stored, particulate foodstuffs, such as grain and pulses. More particularly, it concerns a method of fumigation using phosphine.

### Background

In this specification, for convenience, the term "grain" will be used in the sense that it encompasses not only grain but other particulate foodstuffs that are commonly stored in bulk, such as peanuts, lentils, peas and other pulses. This list is not intended to be exhaustive. Also, in this specification, the term "grain pests" will encompass the pests usually found in stored "grain" and well known to persons who handle grain storages, being predominantly beetles and some species of moths.

For many years, a range of chemical pesticides have been applied to stored grain to kill the grain pests that may be present in the grain. Many of such chemical pesticides leave residues which can be harmful, and care has to be exercised to ensure that the maximum residue limits (MRL) are not exceeded.

This problem with residues has led to the preference for using fumigants instead of the protectant chemicals. And among the fumigants, phosphine is preferred because any residue that might be left in the grain will be lost or oxidised to harmless phosphate when the grain is processed to produce a food. When phosphine fumigation is performed using dosage rates that are recommended for the present invention, unreacted phosphine also causes no problem in the context of the international permitted residue levels.

The main problem with applying a fumigant such as phosphine to a grain storage (such as a silo) concerns dosage rates and maintaining an environment within the grain which ensures proper elimination of the pests. As noted by Dr R G Winks in his paper entitled "Flow-through phosphine fumigation - a new technique" which was delivered to the Stored Grain Protection Conference, 1983, if the so-called "one-shot" or "one-pass" technique is used with phosphine from a gas source (for example, from a solid formulation of aluminium phosphide) being applied to a leaking silo, the concentration of phosphine within the grain in the silo is likely to decay to zero in about 4 or 5 days. Thus the fumigant is ineffective after about 5 days. Even when a fumigant is applied to grain in a completely sealed silo (for example using the techniques described in the specification of U.S. patent No 4,200,657 to James S Cook), there is a decay of the effective concentration of phosphine in the grain as it is absorbed and used to exterminate grain pests. Thus, whether the fumigant is applied to the grain in utilising Cook's one-pass technique or his recirculating technique (each technique, Cook claims, results in a uniform distribution of phosphine or other fumigant within the grain mass before the forced gas flow through the grain mass is discontinued), there will be a significant fall-off in effectiveness of the technique after a relatively short time period. A similar comment is applicable to the one-shot fumigation technique described in the specification of South African patent application No 86/4806, which corresponds to Australian patent application No 59,258/86 in the name of The Commonwealth Industrial Gases Limited. That technique simply requires the release of a phosphine-containing gas into the grain mass of a silo.

For complete elimination of grain pests, it is essential that a sufficiently high dosage of phosphine remains in the silo long enough to ensure that the more tolerant stages in the development of an insect pest mature into a less tolerant stage and are killed by the phosphine. In this way, resistant strains of the pests cannot develop.

In a substantially gas-tight silo, the phosphine concentration decays to zero in about 16 days. The work required to make old storages gas-tight is costly and is not always successful. Accordingly, Dr Winks proposed a controlled low-flow phosphine fumigation technique to create a lethal environment for insect pests that may be maintained for as long as necessary in silos that are not completely gas-tight.

A basic requirement for the controlled low-flow fumigation technique is to ensure that an adequate phosphine dosage is achieved within the grain. A concentration which is too low will not kill all the stages in the development of an insect. In addition, to be cost effective, the phosphine concentration must not be so high that it is wasteful of fumigant.

### Disclosure of the present invention

It is an object of the present invention to provide a refined and efficient form of the low-flow fumigation method for the long-term control of insect pests in grain using phosphine as a fumigant.

This objective is achieved by passing a low concentration of phosphine through the stored grain continuously in a controlled manner, so that there is a constant linear velocity of gas within the grain mass and there is a constant flow rate of gas from the surface of the grain mass of from 0.5 x 10⁻⁴ to 2.0 x 10⁻⁴ metres per second. This range of flow rates from the surface of the grain mass was ascertained by extensive experimentation to be an effective but economical flow rate. The low phosphine concentration will be in the range of from 4 to 200 micrograms per litre of a carrier gas. With such a concentration and flow rate, the phosphine in the stored grain is sufficient to kill all stages of a developing insect.

The period for which this low-flow fumigation method is used depends upon factors which concern the use of the grain. If the grain is expected to remain stored for a long period, the fumigation method may be applied indefinitely, or on a month on followed by a month off basis (as explained in more detail later in this specification). In other instances, the low-flow fumigation technique may be adopted to control an infestation of grain, and then discontinued. Another use of the present invention is to provide a single fumigation for about one month soon after the harvesting (and storing) of the grain, followed by a second fumigation about one month before the grain is shipped (provided the period between the fumigations does not exceed three months). Yet another way in which the low-flow fumigation technique may be used is to provide a single fumigation treatment with a concentration of phosphine high in the range, followed by a continuous treatment with a lower phosphine concentration to provide protection against re-infestation for the remainder of the storage period. These alternatives are not exhaustive.

The first major benefit of such a low-flow fumigation technique is that the fumigation method is cost effective (higher phosphine concentrations would significantly increase the cost of the fumigation of the grain). The second major benefit is that with phosphine concentrations of less than 50 micrograms per litre, if grain should have to be discharged from a silo for transportation overseas, it may not be necessary to ventilate the grain to drop the residual phosphine level to meet health and safety requirements. (For a discussion of this problem, which is commonly experienced with stored, fumigated grain, see the article entitled "A new way of fumigating with phosphine", which appeared in Rural Research, No 140, Spring 1988, pages 15 to 18, in the paragraph bridging pages 17 and 18.) A third notable benefit of this technique is that it is applicable to all types of grain storage, including silos of all shapes and sizes, grain that is held in confined regions during transportation (for example, in the hold of a ship), and bagged grain in stacks covered by plastic sheets or tarpaulins.

According to the present invention, there is provided a method of fumigating with phosphine a region containing grain or similar particulate material, said method comprising: establishing a constant linear velocity flow through the grain of a carrier gas containing phosphine, the concentration of phosphine in the carrier gas being constant and lying within the range of from 4 micrograms per litre of the gas to 200 micrograms per litre of the gas, and the carrier gas having a flow rate such that the gas leaves the surface of the grain or similar particulate material at a velocity in the range of from 0.5 x 10⁻⁴ to 2.0 x 10⁻⁴ metres per second.

Usually the carrier gas, which carries the phosphine into the grain, will be air, and usually the phosphine will be supplied from a cylinder containing a pressurised mixture of phosphine and carbon dioxide. However, generators of phosphine are available (usually these generators use a controlled reaction between water and a metallic phosphide) for use in place of cylinders. In areas where the regular supply of gas cylinders cannot be guaranteed, an on-site phosphine generator is the preferred source of phosphine.

Preferably the phospine concentration within the gas is maintained within the range of from 10 to 100 micrograms per litre. More preferably the phosphine concentration is in the range of from 15 to 50 micrograms per litre.

The use of constant linear velocity flow of gas within a grain mass is a novel approach to fumigation. Previous fumigation techniques have been established on the basis of flows related to the volume of grain that is to be fumigated.

In one modified form of the method of the present invention, the supply of the fumigant-containing gas is cyclically varied, the gas supply typically being continued for a period of from 25 days to 28 days and then discontinued for a period of from 28 days to 35 days. For this modified form of the invention, a phosphine concentration of at least 10 micrograms per litre is required. In a variant of this modified form of the present invention, if the phosphine is of the order of 100 micrograms per litre, the fumigation need only be applied for 12 to 14 days with a following "off" period of from 28 to 35 days.

In many grain storage establishments, a number of silos of different shapes and sizes are built in close proximity to each other and grain is deposited into an empty silo or removed from a silo containing grain, as required. In such systems, as in any multi-silo storage facility, it is advantageous to provide a single fumigation arrangement which ensures that any number of the silos in the facility can be fumigated without the need to redesign the fumigation system each time a silo is brought into use for grain storage or is removed from the system because it has been emptied of grain. The method of the present invention is applicable to a plurality of silos using a single source of phosphine and carrier gas. This gas mixture source is connected to a single duct. The duct is connected to a gas input port of each silo in the grain storage facility. Between the duct and each silo gas input port, there is a respective valve (which is opened when grain is stored in the silo and is closed when the silo is empty) and a respective orifice plate. Each gas input port should be provided with a gas distribution arrangement to ensure that the input gas moves throughout the grain mass in the silo when fumigation has been established. The orifice plates are scaled or sized to ensure that the maximum pressure drop in the entire system is across the orifice plates.

This arrangement effectively renders the system as a whole insensitive to variations in the system downstream of an orifice plate. Thus if, after steady state conditions have been established, a silo containing grain is emptied of that grain and the valve between that silo and the duct which is connected to each silo is closed, there will be only a minor perturbation of the gas supply to the input ports of the remaining silos in the system. Similarly, if a previously empty silo is filled or partially filled with grain, the opening of the valve between the gas input port of that silo and the gas supply duct enables fumigation of the grain in that silo to commence with only a small effect upon the gas flow into the other silos. The minor correction in gas flow that is required to compensate for the removal of a silo from, or addition of a silo to the system can be effected by bringing the pressure within the duct back to its steady state value by adjustment of a suitable control mechanism for the gas supply to the duct.

Thus, in accordance with the present invention, the method may be carried out in a fumigation arrangement for a grain storage facility having a plurality of silos, the carrier gas and phosphine being supplied from a single source, via a duct connected to said source, to respective connections between said duct and a gas inlet port of each silo, each said connection including a valve and an orifice plate, each said orifice plate being adjusted to provide a pressure drop across the orifice plate which is substantially greater than the pressure drop across any other component between said single source and the silo with which the orifice place is associated.

There may be provided control means which comprises a control valve between the source and the duct, or any other suitable arrangement for controlling the supply of gas to the duct (for example, means to vary the speed of a fan which causes the gas mixture to flow into the duct).

Once such a system has been set up to establish the required flow rate of fumigant-containing gas through the silos, the flow rate through the grain in each silo containing grain can be maintained at the required level when a valve in a connection between the duct and a silo is opened or closed simply by varying the setting of the control valve (or other form of control means) to maintain a constant pressure of the gas within the duct.

The fumigation arrangement useable according to the present invention was designed for use with a plurality of vertical silos (that is, silos having a height to width ratio of at least 1.5 to 1). However, as noted above, the system is equally applicable to grain storage facilities comprising silos of other types and capacities.

Normally, the method of the present invention will be applied indefinitely. However, as also noted earlier in this specification, it is possible to continue the fumigation technique for short periods only, in an "extended-one-shot" technique. It should be noted that the minimum period of application of the fumigant for the complete extinction of each species varies according to three factors, namely (i) the nature of the species, (ii) the concentration of phosphine, and (iii) the ambient temperature. For example, the minimum periods for extinction of the species Sitophilus granarius, Sitophilus oryzae, Sitophilus zeamais, Rhyzopertha dominica, Tribolium castaneum, Bruchus pisorum, Oryzaephilus surinamensis and Ephestica cautella have been determined for phosphine concentrations of from 4 to 100 micrograms per litre in the temperature range from 15°C to 25°C, and have been found to vary from about 50 days at a phosphine concentration of 4 micrograms per litre at 15°C to 10 days at a phosphine concentration of 100 micrograms per litre at 25°C.

Further discussion of the method of the present invention and a description of its implementation in a multi-silo grain storage facility will now be provided, with reference to the accompanying drawings.

### Brief description of the drawings

Figure 1 is a diagram showing the changes in phosphine tolerance of a typical grain pest during its development.

Figure 2 illustrates the reduction in the survival of grain pests within a grain sample when the grain is subjected to fumigation with constant concentrations of phosphine.

Figure 3 is a schematic diagram of a multi-silo fumigation system useable according to the present invention.

### Further discussion of the present invention

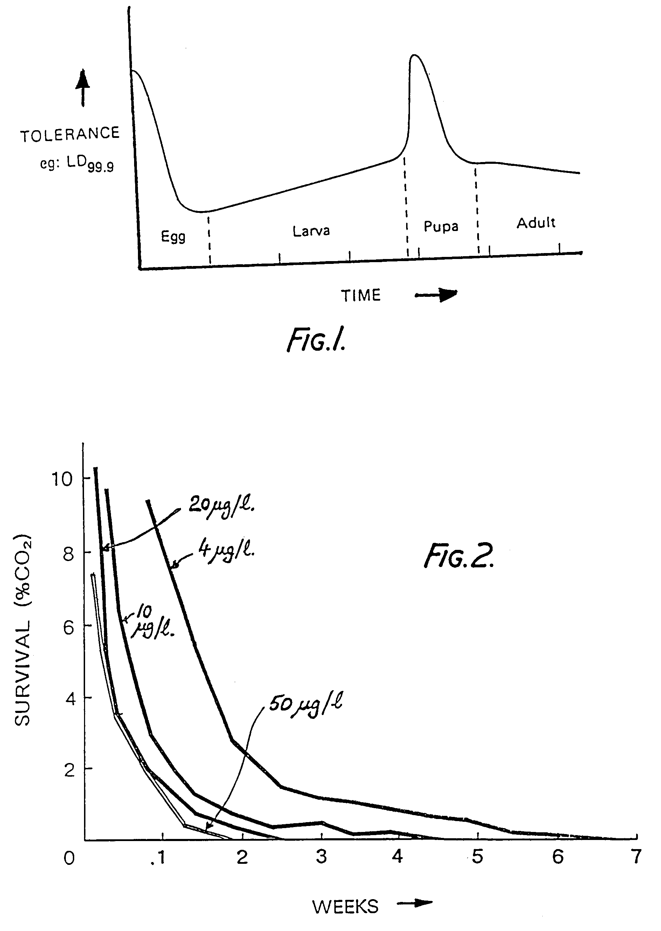

The diagram of Figure 1, which has appeared previously in the aforementioned Rural Research article and in the paper by R G Winks entitled "The effect of phosphine on resistant insects", which is included in the Proceedings of the CASGA Seminar on Fumigation Technology in Developing Countries, 1986, pages 105 to 118, shows how insect eggs and the pupal stage of the development of a beetle or other grain pest is significantly more resistive to fumigation than the larval and adult stages. Thus if a grain storage is fumigated at a constant concentration of phosphine, the concentration must be sufficiently high to destroy all eggs and pupae, or it must be maintained at a value which is adequate to kill all adult pests and their larvae for a time sufficient for the more tolerant eggs to become the less tolerant larvae and for the pupae to become adults.

By monitoring the carbon dioxide production (from insect respiration) in a sample of grain which was infested with Sitophilus granarius, to which phosphine was supplied at a constant concentration, the results displayed in graph form in Figure 2 were obtained. These results show that even with phosphine concentrations as low as 4 micrograms per litre at a temperature of 25°C, all stages of the pest had been destroyed after a period of about 6.5 weeks. The results also show that the time for all insect stages to be destroyed decreases as the phosphine concentration is increased. Similar results have been obtained using other concentrations of phosphine and with infestations of other species of grain pests (including Tribolium castaneum, Rhyzopertha dominica, Sitophilus oryzae, Sitophilus zeamais, Bruchus pisorum, Oryzaephilus surinamensis and Ephestia cautella. From the experimental data obtained, it has been found that all insect pests are killed in a reasonable time with a constant phosphine concentration of at least 4 micrograms per litre. With phosphine concentrations of 2 micrograms per litre, the insect population of the grain increased with time when the pest was Sitophilus granarius and Sitophilus oryzae. Thus concentrations of phosphine lower than 4 micrograms per litre do not effectively fumigate a grain mass.

Although it may appear, at first sight, that increasing the concentration of phosphine in the carrier gas also increases the efficacy of the fumigation technique, this conclusion is incorrect. There are also economic factors to consider. A detailed assessment of economic factors has shown that at concentrations in excess of 200 micrograms of phosphine per litre, fumigant is being wasted. Thus the phosphine concentration in the carrier gas should be kept within the range of from 4 to 200 micrograms per litre. For an effective yet economical fumigation technique, the concentration of phosphine should be held at a constant value selected from within the concentration range of from 4 to 100 micrograms per litre, preferably in the range from 4 to 50 micrograms per litre, with due consideration being given to the times to insect population extinction for the concentration chosen.

Now the average life-cycle for grain insects is about 1 month. Thus if the concentration of phosphine is sufficient to kill all insect stages in a period of less than 30 to 35 days, cessation of the fumigation will not result in the development of a significant population of insect pests within the grain for at least this period. Thus economical, yet effective, maintenance of an insect-free grain storage can be effected if the constant-concentration (controlled low-flow) phosphine fumigation technique is applied for a period to effectively disinfest the grain, and then is discontinued for a period of 28 to 35 days.

The actual period for which the fumigation technique has to be applied depends upon the factors noted previously in this specification, being from 25 to 28 days when the phosphine concentration is about 10 micrograms per litre, and being as short as from 12 to 14 days if the phosphine concentration is increased to about 100 micrograms per litre. However, the inconvenience (and extra cost) associated with the periodic stopping and starting of the fumigation technique may make this variation of the present invention unattractive to some users of the fumigation technique.

The benefits of the controlled low-flow fumigation technique, compared with conventional grain storage treatments, have been outlined in the aforementioned paper delivered by Dr R G Winks at the 1983 Stored Grain Protection Conference. Simple apparatus for establishing the controlled low-flow fumigation technique was suggested when presenting that paper. A system for establishing low-flow fumigation in multi-silo grain storage facilities constitutes a particularly useful application of the present invention.

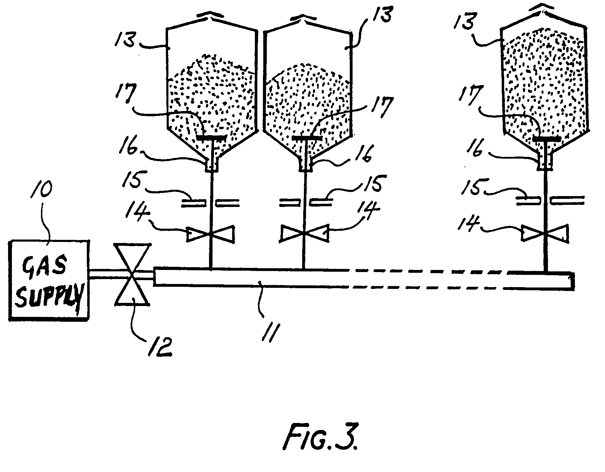

Referring now to Figure 3, the schematically illustrated application of the present invention to a plurality of silos comprises a source 10 of a fumigant-containing gas which is supplied under a pressure of about 500 to 700 Pa (that is, a pressure of around 2 inches water gauge). This pressure is usually established by a fan (not shown in Figure 3) which provides a flow of the carrier gas, into which the fumigant gas (preferably phosphine) is introduced by conventional techniques. The source 10 of gas is connected to a supply duct 11 by a control valve 12. The supply duct 11 is connected to a gas entry port 16 of each silo 13 in the system by a respective connection comprising a valve 14 and an orifice plate 15. Preferably a distributor 17 is provided in each silo to ensure that the carrier gas and its fumigant are distributed within the grain mass in such a manner that a uniform flow of gas is established within each grain mass. Each distributor 17 may comprise a louvre arrangement.

The orifice plates 15 are sized so that the maximum pressure drop in the system (when fumigation of the grain in the silos is in progress) is across the orifice plates. As explained earlier in this specification, a steady state fumigation system is set up with the required gas flow through the masses of grain being fumigated. This steady state condition of operating will be perturbed to only a small degree if an additional silo (also called a "bin") is brought into the system, or if one of the valves 14 is closed because fumigation is not required in a silo (for example, when it has been emptied of grain). Such a minor perturbation can be readily corrected by adjusting the setting of the control valve 12 so that the pressure of gas in the duct 11 is returned to its steady state value, whereupon the system will again be operating in its required manner. In addition, and perhaps more importantly, when this aspect of the present invention is used, only very minor changes in pressure in the gas supply duct are experienced if a bin should be only partly filled, or if some of the bins of the storage facility contain different commodities.

Using such a system, with phosphine as the gaseous fumigant, a fumigation system for a grain storage facility having eighteen silos or bins has been designed.

If phosphine is the gaseous fumigant, the phosphine may be obtained from a cylinder of a pressurised mixture of phosphine and carbon dioxide. However, as noted earlier in this specification, an on-site generator is an alternative source of phosphine, which is preferred in areas where a regular supply of gas cylinders cannot be guaranteed.

Variations to the arrangement shown in Figure 3 are possible. As already noted, the control valve 12 may be replaced with an alternative arrangement for controlling the supply of fumigant-containing gas to the duct 11. For example, the control of the gas supply could be by variation of the speed of a fan that is used to create the gas mixture supply 10, or by the use of multiple fans which are brought into the system, with their speeds varied, as required.

From the foregoing, it will be clear that the present invention provides a method for fumigating grain by maintaining a continuous, low velocity flow of fumigant throughout the grain mass being fumigated and with a constant level of fumigant concentration that is lower than levels that have been used hitherto.

## Claims

1. A method of fumigating with phosphine a region containing grain or similar particulate material, said method comprising: establishing a constant linear velocity flow through the grain of a carrier gas containing phosphine, the concentration of phosphine in the carrier gas being constant and lying within the range of from 4 micrograms per litre of the gas to 200 micrograms per litre of the gas, and the carrier gas having a flow rate such that the gas leaves the surface of the grain or similar particulate material at a velocity in the range of from 0.5 x 10⁻⁴ to 2.0 x 10⁻⁴ metres per second.

2. A method as defined in claim 1, in which the concentration of phosphine in the carrier gas is in the range of from 4 to 100 micrograms per litre.

3. A method as defined in claim 1, in which the concentration of phosphine in the carrier gas is in the range of from 4 to 50 micrograms per litre.

4. A method as defined in any preceding claim, in which the carrier gas is air.

5. A method as defined in any preceding claim, further characterised in that:
(a) the concentration of phosphine in the carrier gas is at least 10 micrograms per litre;
(b) said method is carried out for a period of from 25 days to 28 days;
(c) said method is then discontinued for a period of from 28 days to 35 days;
(d) said method is then carried out for a period of from 25 days to 28 days; and
(e) steps (c) and (d) are repeated sequentially for the duration of the period of fumigation.

6. A method as defined in any one of claims 1 to 4, further characterised in that
(a) the concentration of phosphine in the carrier gas is at least 100 micrograms per litre;
(b) said method is carried out for a period of from 12 days to 14 days;
(c) said method is then discontinued for a period of from 28 days to 35 days;
(d) said method is then carried out for a period of from 12 days to 14 days; and
(e) steps (c) and (d) are repeated sequentially for the duration of the period of fumigation.

7. A method as defined in any preceding claim, in which the phosphine is supplied from a cylinder containing compressed phosphine or a compressed mixture of phosphine with another gas.

8. A method as defined in any one of claims 1 to 6, in which the phosphine is supplied from an on-site generator of phosphine.

9. A method as defined in any preceding claim, in which said region comprises a plurality of silos (13), said carrier gas and phosphine are supplied from a single source (10), via a duct (11) connected to said source, to respective connections between said duct and a gas inlet port (16) of each silo, each said connection including a valve (14) and an orifice plate (15), each said orifice plate being adjusted to provide a pressure drop across the orifice plate which is substantially greater than the pressure drop across any other component between said single source and the silo with which the orifice place is associated.

10. A method as defined in claim 9, in which each silo is provided with a respective distributor (17) for distributing the carrier gas and fumigant mixture within the grain mass or mass of similar particulate material in its associated silo.

11. A method as defined in claim 9 or 10, in which there is provided a control valve (12) between said source and said duct.

## Patentansprüche

1. Verfahren zum Durchgasen eines Getreide oder ähnliches teilchenförmiges Material enthaltenden Bereichs mit Phosphin durch Hindurchströmenlassen eines eine konstante lineare Geschwindigkeit aufweisenden, phosphinhaltigen Trägergasstroms durch das Getreide, wobei die Phosphinkonzentration in dem Trägergas konstant ist und im Bereich von 4 bis 200 µg/l Gas liegt und das Trägergas eine solche Strömungsgeschwindigkeit aufweist, daß es die Oberfläche des Getreides oder ähnlichen teilchenförmigen Materials mit einer Geschwindigkeit im Bereich von 0,5 x 10⁻⁴ bis 2,0 x 10⁻⁴ m/s verläßt.

2. Verfahren nach Anspruch 1, wobei die Phosphinkonzentration im Trägergas im Bereich von 4 bis 100 µg/l liegt.

3. Verfahren nach Anspruch 1, wobei die Phosphinkonzentration im Trägergas im Bereich von 4 bis 50 µg/l liegt.

4. Verfahren nach einem der vorhergehenden Ansprüche, wobei das Trägergas aus Luft besteht.

5. Verfahren nach einem der vorhergehenden Ansprüche, weiterhin dadurch gekennzeichnet, daß
(a) die Phosphinkonzentration im Trägergas mindestens 10 µg/l beträgt;
(b) das Verfahren 25 Tage bis 28 Tage lang durchgeführt wird;
(c) das Verfahren dann 28 Tage bis 35 Tage lang unterbrochen wird;
(d) das Verfahren anschließend 25 Tage bis 28 Tage lang durchgeführt wird und
(e) die Stufen (c) und (d) in der angegebenen Reihenfolge für die Dauer der Durchgasungsperiode wiederholt werden.

6. Verfahren nach einem der Ansprüche 1 bis 4, weiterhin dadurch gekennzeichnet, daß
(a) die Phosphinkonzentration im Trägergas mindestens 100 µg/l beträgt;
(b) das Verfahren 12 Tage bis 14 Tage lang durchgeführt wird;
(c) das Verfahren dann 28 Tage bis 35 Tage lang unterbrochen wird;
(d) das Verfahren anschließend 12 Tage bis 14 Tage lang durchgeführt wird und
(e) die Stufen (c) und (d) in der angegebenen Reihenfolge für die Dauer der Durchgasungsperiode wiederholt werden.

7. Verfahren nach einem der vorhergehenden Ansprüche, wobei das Phosphin aus einem komprimiertes Phosphin oder ein komprimiertes Gemisch aus Phosphin mit einem weiteren Gas enthaltenden Zylinder zugeführt wird.

8. Verfahren nach einem der Ansprüche 1 bis 6, wobei das Phosphin aus einem an Ort und Stelle befindlichen Phosphinerzeuger bzw. -Generator zugespeist wird.

9. Verfahren nach einem der vorhergehenden Ansprüche, wobei der Bereich eine Mehrzahl von Silos (13) umfaßt, das Trägergas und das Phosphin aus einer einzigen Quelle (10) über eine an die Quelle angeschlossene Leitung (11) zu jeweiligen Anschlüssen zwischen der betreffenden Leitung und einer Gaseinlaßöffnung (16) eines jeden Silos geleitet wird, jeder genannte Anschluß ein Ventil (14) und eine Lochplatte (15) aufweist und jede Lochplatte derart eingestellt ist, daß an der Lochplatte ein Druckgefälle entsteht, welches wesentlich größer ist als das Druckgefälle an irgend einer anderen Komponente zwischen der einzigen Quelle und dem Silo, womit die Lochplatte in Verbindung steht.

10. Verfahren nach Anspruch 9, wobei jedes Silo mit einem jeweiligen Verteiler (17) zum Verteilen des Trägergases und Räucherungsgemisches in der Getreidemasse oder Masse ähnlichen teilchenförmigen Materials in dem betreffendem Silo ausgestaltet ist.

11. Verfahren nach Anspruch 9 oder 10, wobei zwischen der Quelle und der Leitung ein Steuerventil (12) vorgesehen ist.

## Revendications

1. Procédé de fumigation par une phosphine d'une zone contenant du grain ou une matière particulaire analogue, le procédé comprenant l'établissement, dans le grain, d'un courant à vitesse linéaire constante d'un véhicule gazeux contenant une phosphine, la concentration de phosphine dans le véhicule gazeux étant constante et étant comprise entre 4 et 200 µg/l du gaz, le véhicule gazeux ayant un débit tel que le gaz quitte la surface du grain ou d'une matière particulaire analogue à une vitesse comprise entre 0,5.10⁻⁴ et 2,0.10⁻⁴ m/s.

2. Procédé selon la revendication 1, dans lequel la concentration de la phosphine dans le véhicule gazeux est comprise entre 4 et 100 µg/l.

3. Procédé selon la revendication 1, dans lequel la concentration de phosphine dans le véhicule gazeux est comprise entre 4 et 50 µg/l.

4. Procédé selon l'une quelconque des revendications précédentes, dans lequel le véhicule gazeux est l'air.

5. Procédé selon l'une quelconque des revendications précédentes, caractérisé en outre en ce que :
(a) la concentration de la phosphine dans le véhicule gazeux est d'au moins 10 µg/l,
(b) le procédé est exécuté pendant une période comprise entre 25 et 28 jours,
(c) le procédé est interrompu pendant une période de 28 à 35 jours,
(d) le procédé est alors exécuté pendant une période de 25 à 28 jours, et
(e) les étapes (c) et (d) sont répétées successivement pendant la durée de la période de fumigation.

6. Procédé selon l'une des revendications 1 à 4, caractérisé en outre en ce que
(a) la concentration de la phosphine dans le véhicule gazeux est d'au moins 100 µg/l,
(b) le procédé est exécuté pendant une période de 12 à 14 jours,
(c) le procédé est alors interrompu pendant une période de 28 à 35 jours,
(d) le procédé est alors exécuté pendant une période de 12 à 14 jours, et
(e) les étapes (c) et (d) sont répétées successivement pendant la durée de la période de fumigation.

7. Procédé selon l'une quelconque des revendications précédentes, dans lequel la phosphine est transmise d'une bouteille contenant de la phosphine comprimée ou un mélange comprimé de phosphine et d'un autre gaz.

8. Procédé selon l'une quelconque des revendications 1 à 6, dans lequel la phosphine est transmise à partir d'un générateur de phosphine disposé sur place.

9. Procédé selon l'une quelconque des revendications précédentes, dans lequel ladite région comporte plusieurs silos (13), le véhicule gazeux et la phosphine sont fournis à partir d'une seule source (10) par un conduit (11) relié à la source et à des raccords respectifs formés entre le conduit et un canal (16) d'entrée de gaz de chaque silo, chaque raccord comprenant une vanne (14) et une plaque (15) à orifice, chaque plaque à orifice étant ajustée pour fournir une perte de charge, dans la plaque à orifice, qui est nettement supérieure à la perte de charge dans tout autre élément compris entre la source unique et le silo auquel est associée la plaque à orifice.

10. Procédé selon la revendication 9, dans lequel chaque silo possède un distributeur respectif (17) destiné à distribuer le mélange du véhicule gazeux et de la matière de fumigation dans la masse du grain ou la masse de matière particulaire analogue dans le silo associe.

11. Procédé selon la revendication 9 ou 10, dans lequel une vanne de réglage (12) est placée entre ladite source et le conduit.
